(19) Europäisches Patentamt
European Patent Office
Office européen des brevets

(11) Publication number: **0 339 635 B1**

# (12) EUROPEAN PATENT SPECIFICATION

(45) Date of publication of patent specification: **21.12.94**

(51) Int. Cl.5: **C08F 283/10**, C08F 299/02, C08J 5/04

(21) Application number: **89107632.5**

(22) Date of filing: **27.04.89**

The file contains technical information submitted after the application was filed and not included in this specification

## (54) Resin composition and fiberreinforced composite material produced therefrom.

(30) Priority: **28.04.88 JP 106851/88**

(43) Date of publication of application: **02.11.89 Bulletin 89/44**

(45) Publication of the grant of the patent: **21.12.94 Bulletin 94/51**

(84) Designated Contracting States: **BE DE FR GB IT**

(56) References cited:
**EP-A- 0 096 906**
**EP-A- 0 155 036**
**US-A- 4 522 962**

(73) Proprietor: **KANEGAFUCHI KAGAKU KOGYO KABUSHIKI KAISHA**
**2-4 Nakanoshima 3-chome**
**Kita-ku Osaka-shi Osaka-fu 530 (JP)**

(72) Inventor: **Nakamura, Masaaki**
**31-17, Shioya-cho 6-chome**
**Tarumi-ku**
**Kobe-shi Hyogo (JP)**
Inventor: **Kurimoto, Kenji**
**17-11, Wakabadai 3-chome**
**Kita-ku**
**Kobe-shi Hyogo (JP)**
Inventor: **Nakajima, Hiroki**
**14-7, Nishikigaoka 1-chome**
**Uosumi-cho**
**Akashi-shi Hyogo (JP)**

(74) Representative: **VOSSIUS & PARTNER**
**Postfach 86 07 67**
**D-81634 München (DE)**

EP 0 339 635 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a resin composition and a fiber-reinforced composite material including the same. More particularly, it pertains to a resin composition for use in a fiber-reinforced composite material made by reaction injection molding, and to a fiber-reinforced composite material produced thereby.

Reaction injection molding (RIM) is a one-shot molding process wherein a liquid resin containing a catalyst is injected into a mold to allow the resin to collide with the mold to thereby effect molding. Reaction injection molding as a molding method for thermosetting resins is currently in use. A typical example thereof is reaction injection molding for producing molded urethane articles. Many studies have been made concerning the possible use of reaction injection molding of other thermosetting resins in order to produce molded articles which have desirable properties. For example, though urethane resins are poor in rigidity and heat resistance, improvements in rigidity and heat resistance can be expected from epoxy resins. Therefore, the practical application of reaction injection molding to epoxy resins is being considered. Epoxy resins have disadvantages in that their curing reaction is slow and the impact resistance of the molded articles thereof is low as compared with urethane resins. The impact resistance of the molded articles can be improved by reinforcing the resins with fiber. Reinforcing fiber can be mixed with raw materials before injection into a mold in the reaction injection molding of urethane resins. In this method, however, it is difficult to operate the apparatus because the injected composition is too viscous, even when the length of the reinforcing fiber is only about 2 to 3 cm. Because improvement of impact strength depends on the size of the reinforcing fiber, significant improvement in product properties cannot be expected with such short reinforcing fibers.

There has also been proposed a method in which the reinforcing fibers are preset into the mold for use in reaction injection molding. This method is more suitable as the fiber reinforcing method for the epoxy resins because it does not increase the viscosity of the composition being injected. Further, in the latter method, continuous fibers of 10 cm or longer in length can be used as the reinforcing fiber and an improvement in impact strength can thus be effected. However, when such continuous fibers are preset into the mold and reaction injection molding is carried out, impregnation of the interstices of the reinforcing fiber mass with matrix resins is an important technical problem in reaction injection molding.

EP-A-0 096 906 and EP-A-0 155 036 disclose heat-curable epoxy compositions comprising a (poly)-epoxide, certain unsaturated monomers, and carboxyl-containing compounds or poly(meth)acrylate esters of a polyol, respectively, as well as radical initiators and curing agents. However, the properties of these compositions are still not satisfactory.

Accordingly, it is the object of the invention to eliminate the above-mentioned disadvantages and to improve the wetting characteristics and viscosity of the matrix resins and the quality and shape of the reinforcing fiber to improve its impregnatability and reinforcing effect.

The object has been achieved by the finding that such disadvantages can be eliminated by using a resin composition comprising a combination of an epoxy resin with certain specific substances resulting in an improved fiber reinforced composite material obtained therefrom. The present invention has been performed on the basis of these findings.

Particularly, an object of the present invention is to provide a resin composition which allows excellent properties inherent in epoxy resins during curing to be left intact, is free from the above-described disadvantages and allows a fiber-reinforced composite material to be readily produced by reaction injection molding.

Another object of the present invention is to provide a fiber-reinforced composite material which is produced from said resin composition and is excellent in mechanical strength, modulus, heat resistance and impact resistance.

Accordingly, the present invention provides, in one aspect, a resin composition suitable for use in reaction injection molding, which contains an epoxy resin (A), a glycidyl methacrylate (B), a vinyl ester (C), a curing agent (D) for said epoxy resin, a curing accelerator (E) and a radical polymerization initiator (F).

The present invention provides, in another aspect, a fiber-reinforced composite material which is produced by a reaction injection molding method wherein said resin composition is introduced into a mold in which reinforcing fibers have been previously preset and then curing is conducted.

The epoxy resins (A) useful in the present invention are those having two or more epoxy groups terminating their molecules. It is preferred to use epoxy resins which are liquid at room temperature. Particularly, diglycidyl ether of bisphenol A type bifunctional epoxy resins represented by the following general formula (I) are preferred from the view points of viscosity and easy handleability.

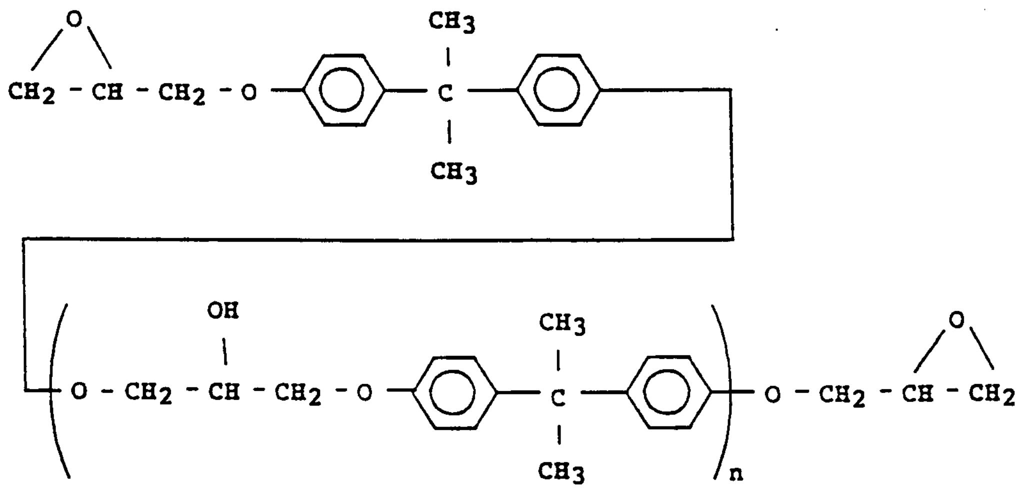

(1)

In the formula (I), n is 0 or an integer of from 1 to 9.

Such epoxy resins are commercially available. Examples of such commercially available epoxy resins include Epikote® 828 (Yuka Shell KK), DER 330 (Dow Chemical), GY 250 (Ciba Geigy), EP 4300 (Asahi Electro-Chemcial Co., Ltd.) and AER 331 (Asahi Kasei Industry Co., Ltd.).

Glycidyl methacrylate (B) used in the present invention has the following functions. In the first place, it lowers the viscosity of the whole composition. In the second place, since it has both an epoxy group and a methacrylate group, it functions as a crosslinking agent between the polymerization network of the epoxy resin and that of the vinyl ester (C), whereby the structure of the resulting cured product can be made more uniform. Accordingly, it is preferred to premix the glycidyl methacrylate (B) with the epoxy resin (A).

There are no particular limitations with regard to the amount of glycidyl methacrylate to be used. However, when the amount of glycidyl methacrylate is too small, the desired effect of lowering the viscosity of the total composition, is not obtained to any substantial range. When the amount of glycidylmethacrylate is too large, the excellent properties of the epoxy resins which substantially prevent shrinkage during curing and molding and give cured molded articles having proper elongation are diminished. Further, as the amount of glycidyl methacrylate is increased, the resulting cured products have improved heat resistance, but conversely, shrinkage upon curing is increased and the strength of the resulting product is lowered. The preferred amount of glycidyl methacrylate (B) is in the range of about 5 to 50% by weight based on the combined amount of the epoxy resin (A) and glycidyl methacrylate (B).

The vinyl ester (C) used in the present invention serves to accelerate the curing reaction of the whole of the resin composition of the present invention. The epoxy resin has a disadvantage in that curing time in the reaction injection molding is long. However, when the radical polymerization of the vinyl ester is allowed to proceed simultaneously, the curing reaction of the epoxy resin seems to be accelerated. Accordingly, any of the vinyl esters can be used as the vinyl ester component (C) of the present invention so long as they have a radical-polymerizable unsaturated bond at a terminal position in their molecule. However, vinyl esters having an acrylic ester structure are preferred from the view point of reaction rate. The di(meth)-acrylates of glycidyl ether type epoxy resins represented by the following general formula (2) are preferred from the viewpoint of compatibility with the epoxy resin.

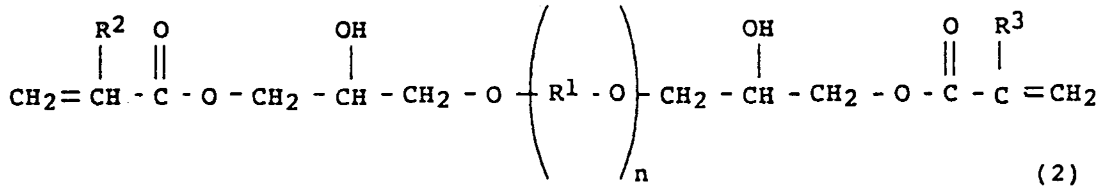

(2)

In formula (2), $R^1$ is an alkylene group having from 2 to 5 carbon atoms; $R^2$ and $R^3$ are each individually the same or diffeent and are a hydrogen or a $CH_3$ group; and n is an integer of from 1 to 10.

Further, di(meth)acrylates represented by the following general formula (3) are preferred from the viewpoints of viscosity and easy handleability.

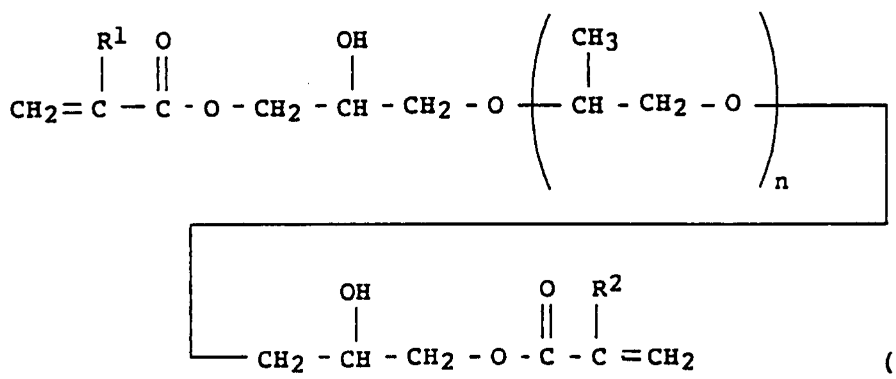

(3)

In the formula (3), $R^1$ and $R^2$ are independently hydrogen or a $CH_3$ group; and n is an integer of from 1 to 10.

Such vinyl esters are commercially available. Examples of such commercially available vinyl esters include Epoxy ester 70 PA, 200 PA and 400 PA (manufactured by Kyoeisha Yushi Kagaku Kogyo KK). For the purpose of enhancing heat resistance after curing, di(meth)acrylates having aromatic rings in their molecular structure such as di(meth)acrylates represented by the following general formula (4) are preferred.

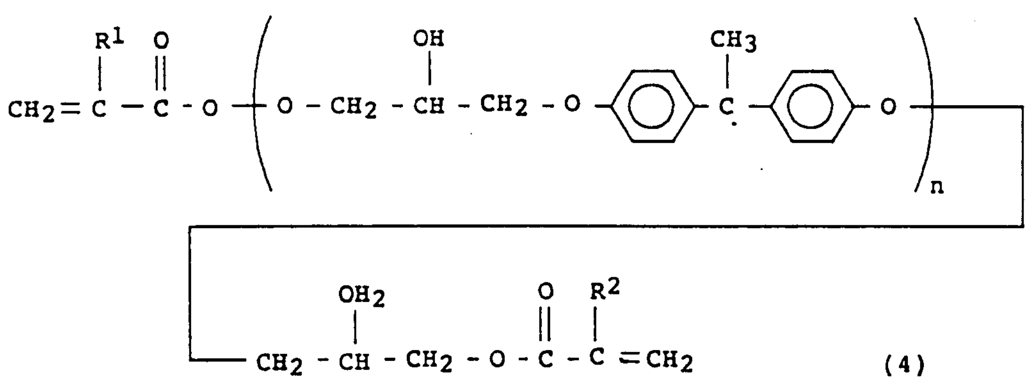

(4)

In the formula (4), $R^1$ and $R^2$ are independently hydrogen or a $CH_3$ group; and n is an integer of from 1 to 9.

There are no particular limitations with regard to the amount of the vinyl ester (C) to be blended. However, when the amount of the vinyl ester (C) used is too small, there is insufficient acceleration of the curing reaction, while when the amount is too large, shrinkage during the curing molding of the composition is increased. The amount of the vinyl ester is in the range of preferably 1 to 100 parts by weight, more preferably 5 to 50 parts by weight based on 100 parts by weight of the combined amount of the components (A) and (B).

The curing agent (D) for the epoxy resin, which is used in the present invention, is mainly reacted with the components (A) and (B) to accelerate the formation of the polymerization network of the epoxy resin. The curing agent (D) can be chosen from among conventional curing agents, such as polyamines, polyamides, dibasic acids and dibasic acid anhydrides, depending upon the intended purposes, reaction rate and the desired physical properties of the cured products. For example, the polyamines are preferred from the viewpoint of reaction rate, but offer less sutisfactory product with respect to heat resistance. For the purpose of improving heat resistance, the dibasic acid anhydrides, such as methyltetrahydrophthalic anhydride, nadic anhydride, methylnadic anhydride and pyromellitic dianhydride are preferred as the curing

agent (D). Though there is no particular limitation with regard to the amount of the curing agent to be used, it is preferred to use the curing agent (D) in an amount of about 0.5 to 1.2 equivalents per one epoxy equivalent in the combined amount of the epoxy resin (A) and glycidyl methacrylate (B). For the purpose of giving cured products having well-balanced characteristics, 0.7 to 1.0 equivalent of curing agent is preferred.

The curing accelerator (E) used in the present invention has the effect of accelerating initiating and carrying out the curing reaction. For this purpose, there are generally used tertiary amines, imidazoles, phenols, organometallic compounds and/or inorganic metallic compounds. When the curing accelerator is to be previously mixed with other components, the imidazole compounds are preferred from the viewpoint of stability. Though there are no particular limitations with regard to the amount of the curing accelerator to be used, it is preferred to use the curing accelerator in an amount of about 0.01 to 10% by weight, preferably 0.1 to 5% by weight based on the total amount of the resin composition of the present invention.

The radical polymerization initiator (F) used in the present invention generates a radical by heating and functions as a polymerization initiator for glycidyl methacrylate (B) and the vinyl ester (C). Any of the conventional radical polymerization initiators can be used as the radical polymerization initiator (F) of the present invention. However, organic peroxides conventionally used as initiators are preferred. It is of course preferred to select an initiator from among those which are decomposed within a reasonable time at the temperature at which the curing reaction is otherwise carried out. Examples of the organic peroxides include t-butyl hydroperoxide, cumene hydroperoxide, di-t-butyl peroxide, dicumyl peroxide, lauroyl peroxide, benzoyl peroxide and t-butyl peroxybenzoate. Though there are no limitations with regard to the amount of the radical polymerization initiator (F) to be used, it is preferred to used the radical polymerization initiator in an amount of about 0.1 to 5% by weight based on the total amount of the resin composition of the present invention.

The resin composition of the present invention comprises the above-described components (A) to (F). The composition has a low viscosity as compared with that of the epoxy resin alone, has a high curing rate and allows reaction injection molding to be conducted. Hence, the composition is practically very significant. The resin composition gives cured products having the excellent properties inherent in the epoxy resin and is very useful as a matrix resin for fiber-reinforced composite material.

In producing a fiber-reinforced composite material from the resin composition of the present invention by a reaction injection molding method, there is preferred a method wherein a reinforcing fiber is previously set into a mold. Any of the usual reinforcing fibers can be used in the present invention without particular limitation. For example, various organic fibers, inorganic fibers and metallic fibers can be used depending upon the desired characteristics of the composite material to be produced. Though the characteristics of the resulting composite material vary depending on the type and shape of the reinforcing fiber which is used, the reinforcing effect obtained by using equal amounts of the fibers is increased with an increase in the length of the fiber, irrespective of the type (kind) of the reinforcing fiber. Accordingly, it is preferred to use a continuous fiber for the purpose of obtaining a high reinforcing effect. For the purpose of improving the impregnating properties of the matrix resin, non-woven mat-form fibers are preferred. Examples of the non-woven mat-form continuous fibers include roving strand mat and continuous strand mat. A combination thereof is effective in obtaining a reinforcing effect. It is preferred to use glass fiber as the reinforcing fiber from the viewpoints of improving impact resistance and reducing cost.

The resin compositions of the present invention have low viscosities and give composite materials containing the matrix resin having improved impregnating properties, even when a reinforcing material composed of the above-described continuous fiber is preset into a mold and reaction injection molding is conducted. Further, the thus-produced fiber-reinforced composite material does not suffer from the problem of failure in structure due to poor impregnation so that the mechanical characteristics thereof can be improved.

The resin composition of the present invention can be molded in a short time by a conventional reaction injection molding method, and the fiber-reinforced composite material can be readily prepared from the resin composition by using appropriate reinforcing fiber. The fiber-reinforced composite material produced by the present invention is excellent in mechanical strength and heat resistance and allows a wide degree of freedom of the composition of the reinforcing material to be used as well so that molded articles having reduced anisotropy in mechanical strength can be produced.

The present invention will now be illustrated in more detail with reference to the following examples which are not to be construed as limiting the present invention in any way. Unless otherwise indicated, all parts, percents and ratios are by weight.

The following raw resin materials and reinforcing fibers were used.

Component (A): Epikote® 828 (hereinafter abbreviated to 828) manufactured by Yuka Shell Epoxy

| | |
|---|---|
| | KK. |
| Component (b): | Blenmer® G (glycidyl methacrylate, hereinafter abbreviated to GMA), manufactured by Nippon Oils & Fats Co., Ltd. |
| Component (C): | Epoxy ester 70 PA (propylene glycol diglycidyl ether diacrylate, hereinafter abbreviated to 70 PA), manufactured by Kyoeisha Yushi Kagaku Kogyo KK. Epoxy ester 200 PA (both are polyoxypropylene glycol diglycidyl ether diacrylate, hereinafter abbreviated to 200 PA and 400 PA, respectively), manufactured by Kyoeisha Yushi Kagaku Kogyo KK. |
| Component (D): | Methylhimic anhydride® (methylnadicanhydride, hereinafter abbreviated to NMA), manufactured by Hitachi Kasei KK. |
| Component (E): | BMI-12 (benzylmethylimidazole, hereinafter abbreviated to BMI), manufactured by Yuka Shell Epoxy KK. |
| Component (F): | Perbutyl Z (t-butyl peroxybenzoate, hereinafter abbreviated to t-BPB), manufactured by Nippon Oils & Fats Co., Ltd. |
| Glass fiber mat: | Roving mat: Roving mat layer of Lami-mat, manufactured by Nitto Boseki Co., Ltd. was used.<br>Continuous strand mat, manufactured by Asahi Fiber Glass KK. |

Examples 1 to 11 and Comparative Examples 1 and 2

Resin compositions containing components at ratios given in Table 1 were prepared. Reinforcing materials composed of laminates of fiber mats given in Table 2 were prepared. The resin composition and the reinforcing material were used in combination as shown in Table 1. The fiber-reinforced composite materials were prepared in the following manner.

A reaction injection molding machine having two injection lines was used. The reinforcing material was previously preset into a mold. The resin composition was then injected for 2 to 3 seconds and cured at 130 °C for 6 minutes to prepare a flat board-form fiber-reinforced composite material measuring 270×220×3 mm. In this preparation, a mixture of the components (A), (B) and (C) was charged into one raw material tank and a mixture of the components (D), (E) and (F) was charged into another tank. Each of the mixtures was deaerated under reduced pressure before injection. Pressure within the mold was kept under vacuum by means of a vacuum pump before the resin composition was injected. After injection, pressure was elevated to 2 $kg/cm^2$ by nitrogen gas.

Each of the fiber-reinforced composite materials prepared in Examples 1 to 5 and 11 and Comparative Example 2 was tested to determine their characteristics. The results are shown in Table 3. In Comparative Example 1, a satisfactory molded article could not be obtained within a predetermined die close time (6 minutes).

Table 1

| | Comp. Ex. 1 | Comp. Ex. 2 | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|---|
| (A) Epikote® 828 | 100 | 70 | 63 | 49 | 49 | 49 | 40 | 49 | 49 | 49 | 49 | 49 | 49 |
| (B) GMA | 0 | 0 | 7 | 21 | 40 | 21 | 21 | 21 | 21 | 21 | 21 | 21 | 21 |
| (C) 70 PA | 0 | 30 | 30 | 30 | 20 | 0 | 0 | 0 | 30 | 30 | 30 | 30 | 30 |
| 200 PA | 0 | 0 | 0 | 0 | 0 | 30 | 30 | 0 | 0 | 0 | 0 | 0 | 0 |
| 400 PA | 0 | 0 | 0 | 0 | 0 | 0 | 0 | 30 | 0 | 0 | 0 | 0 | 0 |
| (D) NMA | 80 | 56 | 61 | 75 | 61 | 61 | 61 | 61 | 61 | 61 | 61 | 61 | 61 |
| (E) BMI | 1.15 | 0.81 | 0.83 | 0.89 | 1.09 | 0.89 | 0.89 | 0.89 | 0.89 | 0.89 | 0.89 | 0.89 | 0.89 |
| (F) t-BPB | 0 | 0.35 | 0.45 | 0.64 | 0.78 | 0.64 | 0.64 | 0.64 | 0.64 | 0.64 | 0.64 | 0.64 | 0.64 |
| | a | a | a | a | a | a | a | b | c | d | e | f | g |

Note (1) : Numerals in Table are parts by weight.

(2) : Abbreviations of a,b ..... g in the column of reinforcing material represent the laminated structure of reinforcing material given in Table 2.

Table 2

| Kind | Structure of reinforcing material (laminated layer) |
|---|---|
| a | RX RX RX RX RX RX RX |
| b | RX RY RY RX RY RY RX |
| c | RX RY RY RY RY RY RX |
| d | RX RY RY CO RY RY RX |
| e | RX RY CO RY CO RY RX |
| f | RX RY RY RY RY RY RX |
| g | RX RX RX RX RX RX RX |

Note
(1) : RX,RY are roving mat and orientation directions which varied at an angle of 90 degrees from each other.
(2) : CO is continuous strand mat.

Table 3

| | Comp. Ex. 2 | Ex. 1 | Ex. 2 | Ex. 3 | Ex. 4 | Ex. 5 | Ex. 11 |
|---|---|---|---|---|---|---|---|
| Flexural strength (23°C) $10^3$ kg/cm2 | 13 | 14 | 14 | 13 | 13 | 13 | 14 |
| Flexural strength (150°C) $10^3$ kg/cm2 | 8.2 | 9.5 | 10 | 12 | 10 | 9.5 | 13 |
| Flexural modulus (23°C) $10^5$ kg/cm2 | 4.2 | 4.2 | 4.3 | 4.3 | 4.1 | 3.9 | 4.9 |
| Flexural modulus (150°C) $10^5$ kg/cm2 | 3.0 | 3.4 | 3.5 | 3.5 | 3.4 | 3.2 | 4.0 |
| Deflection temp. under load °C | >250 | >250 | >250 | >250 | >250 | >250 | >250 |
| Notched Izod impact strength kg·cm/cm | >200 | >200 | >200 | >200 | >200 | >200 | >200 |

Each of the fiber-reinforced composite materials prepared in Examples 6 to 11 was subjected to anisotropy test with respect to flexural properties. The results are shown in Table 4.

Table 4

| | Ex. 6 | Ex. 7 | Ex. 8 | Ex. 9 | Ex. 10 |
|---|---|---|---|---|---|
| Flexural strength in the direction making an angle of 0° $10^3$ kg/cm$^2$ | 10 | 9.1 | 9.6 | 9.2 | 9.5 |
| Flexural strength in the direction making an angle of 90° $10^3$ kg/cm$^2$ | 8.1 | 8.9 | 8.5 | 8.5 | 8.0 |
| Flexural modulus in the direction making an angle of 0° $10^5$ kg/cm$^2$ | 3.3 | 3.0 | 3.2 | 3.2 | 3.1 |
| Flexural modulus in the direction making an angle of 90° $10^5$ kg/cm$^2$ | 2.5 | 2.7 | 2.3 | 2.4 | 2.1 |

## Claims

**1.** A resin composition for use in reaction injection molding, which comprises an epoxy resin (A), glycidyl methacrylate (B), a vinyl ester (C), a curing agent (D) for said epoxy resin, a curing accelerator (E) and a radical polymerization initiator (F).

2. A resin composition according to claim 1, wherein said epoxy resin (A) is previously mixed with said glycidyl methacrylate (B) before admixing with the remainder of the components.

3. A resin composition according to claim 1, wherein said epoxy resin (A) is an epoxy resin represented by the following formula (1)

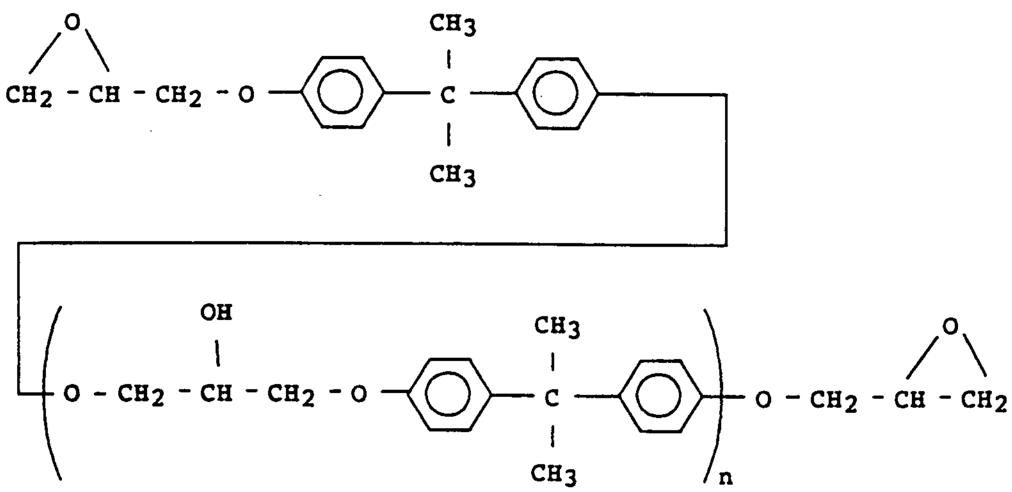

(1)

wherein n is 0 or an integer of from 1 to 9.

4. A resin composition according to claim 1, wherein said vinyl ester (C) is a di(meth)acrylate represented by the following general formula (2)

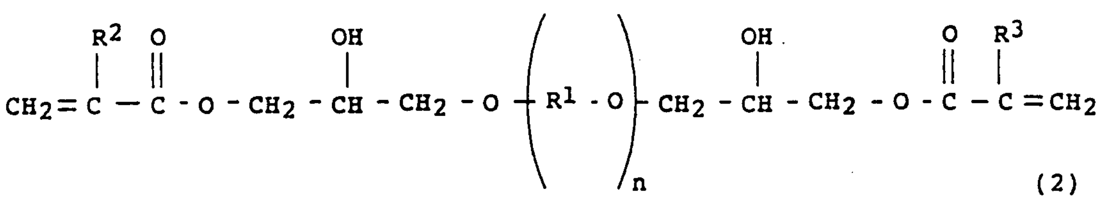

(2)

wherein $R^1$ is an alkylene group having from 2 to 5 carbon atoms; $R^2$ and $R^3$ are each individually hydrogen or a $CH_3$ group; and n is an integer of 1 to 10.

5. A resin composition according to claim 1, wherein said vinyl ester (C) is a di(meth)acrylate represented by the following general formula (3)

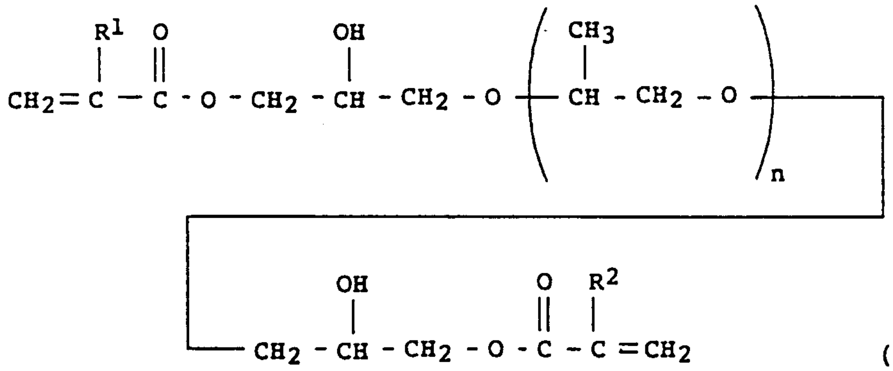

(3)

wherein $R^1$ and $R^2$ are each individually hydrogen or a $CH_3$ group; and n is an integer of from 1 to 10.

**6.** A resin composition according to claim 1, wherein said vinyl ester (C) is di(meth)acrylate represented by the following general formula (4)

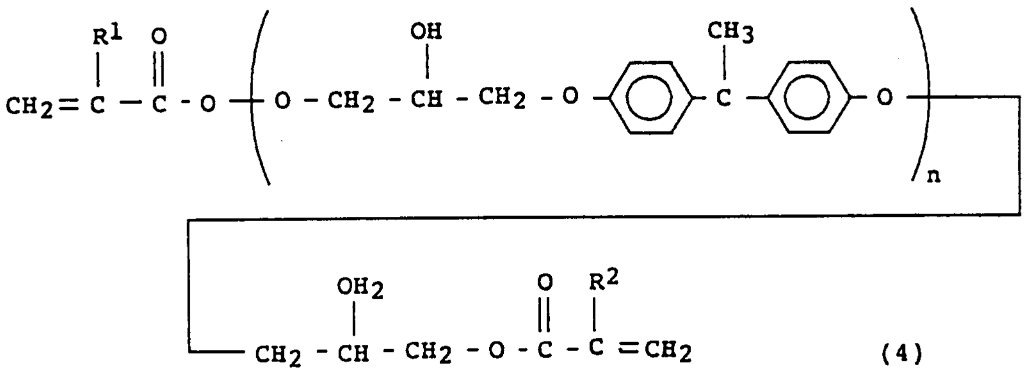

(4)

wherein $R^1$ and $R^2$ are each individually hydrogen or a $CH_3$ group; and n is an integer of from 1 to 9.

**7.** A resin composition according to claim 1, wherein said curing agent (D) for said epoxy resin is a dibasic acid anhydride.

**8.** A resin composition according to claim 1,wherein said curing accelerator (E) is an imidazole compound.

**9.** A fiber-reinforced composite material produced by a reaction injection molding method wherein the resin composition as claimed in any one of claims 1 to 7 is introduced into a mold in which reinforcing fibers have been previously preset and then curing is conducted.

**10.** A fiber-reinforced composite material according to claim 9, wherein at least a part of said reinforcing fibers are in the form of a non-woven mat.

**11.** A fiber-reinforced composite material according to claim 9, wherein said reinforcing fibers comprise glass fiber.

**12.** A fiber reinforced composite material according to claim 9, wherein said reinforcing fibers comprise an organic polymer.

**13.** A fiber-reinforced compsite material according to calim 9, wherein said reinforcing fibers comprise a metal.

## Patentansprüche

1. Harzzusammensetzung zur Verwendung im Reaktionsspritzguß, umfassend ein Epoxidharz (A), Glyzidylmethacrylat (B), einen Vinylester (C), einen Härter (D) für das Epoxidharz, einen Härtungsbeschleuniger (E) und einen radikalischen Polymerisationsinitiator (F).

2. Harzzusammensetzung nach Anspruch 1, bei der das Epoxidharz (A) vorher mit dem Glyzidylmethacrylat (B) vermischt wird, bevor die restlichen Bestandteile zugemischt werden.

3. Harzzusammensetzung nach Anspruch 1, bei dem das Epoxidharz (A) durch die folgende Formel (1) wiedergegeben wird

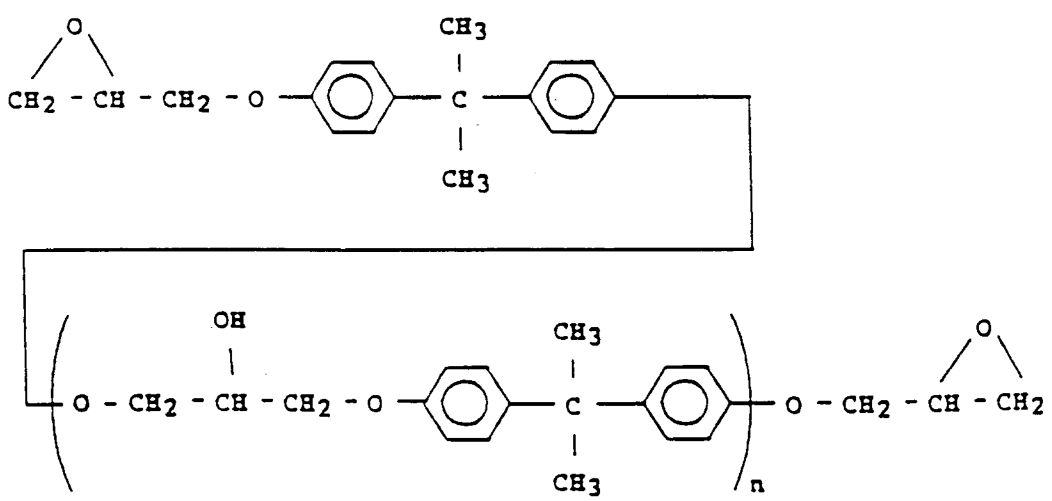

(1)

in der n Null oder eine ganze Zahl von 1 bis 9 bedeutet.

4. Harzzusammensetzung nach Anspruch 1, bei der der Vinylester (C) ein Di(meth)acrylat ist, wiedergegeben durch die folgende allgemeine Formel (2)

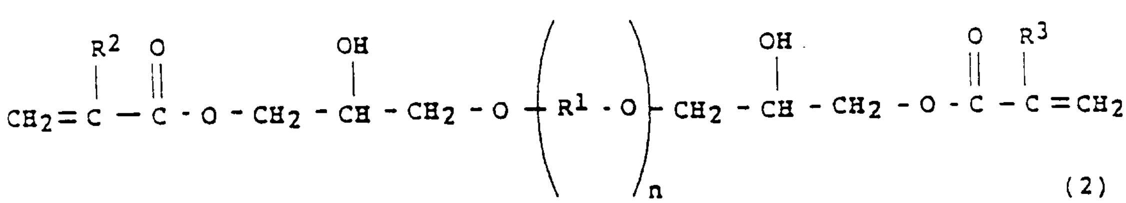

(2)

in der $R^1$ einen Alkylenrest mit 2 bis 5 Kohlenstoffatomen bedeutet; die Reste $R^2$ und $R^3$ jeweils unabhängig ein Wasserstoffatom oder eine $CH_3$-Gruppe bedeuten; und n eine ganze Zahl von 1 bis 10 darstellt.

5. Harzzusammensetzung nach Anspruch 1, bei der der Vinylester (C) ein Di(meth)acrylat ist, wiedergegeben durch die folgende allgemeine Formel (3)

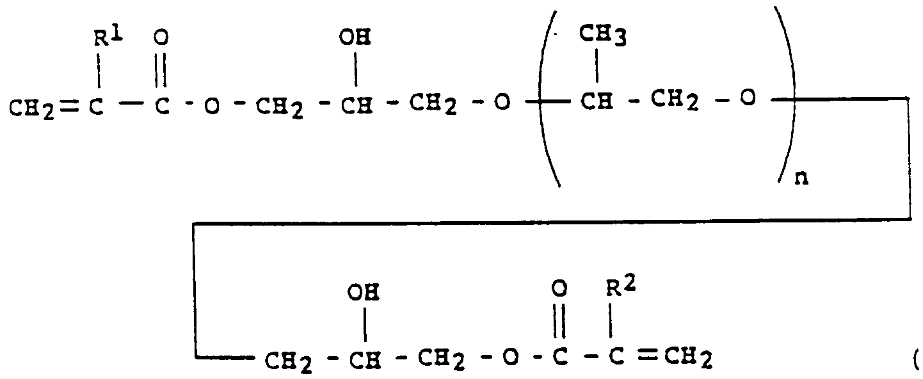

(3)

in der die Reste $R^1$ und $R^2$ jeweils unabhängig ein Wasserstoffatom oder eine $CH_3$-Gruppe bedeuten; und n eine ganze Zahl von 1 bis 10 darstellt.

6. Harzzusammensetzung nach Anspruch 1, bei der der Vinylester (C) ein Di(meth)acrylat ist, wiedergegeben durch die folgende allgemeine Formel (4)

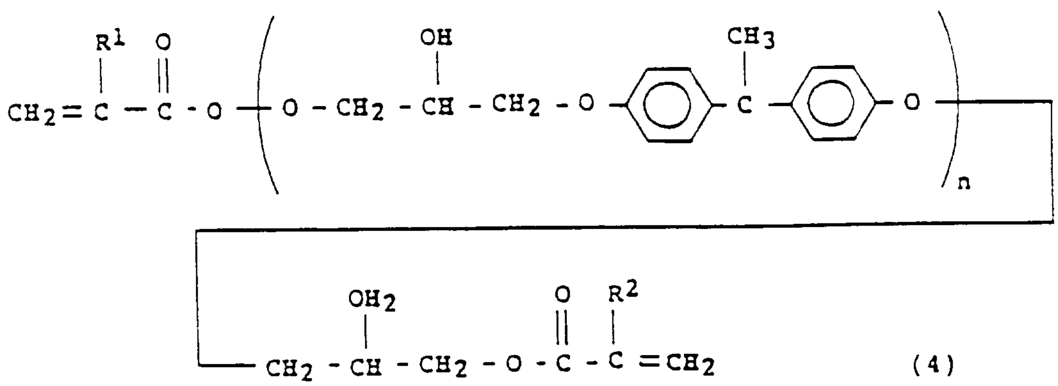

(4)

in der die Reste $R^1$ und $R^2$ jeweils unabhängig ein Wasserstoffatom oder eine $CH_3$-Gruppe bedeuten; und n eine ganze Zahl von 1 bis 9 ist.

7. Harzzusammensetzung nach Anspruch 1, bei der der Härter (D) für das Epoxidharz ein dibasisches Säureanhydrid ist.

8. Harzzusammensetzung nach Anspruch 1, bei der der Härtungsbeschleuniger (E) eine Imidazolverbindung ist.

9. Nach einem Reaktionsspritzgußverfahren hergestellter faserverstärkter Verbundwerkstoff, bei dem die Harzzusammensetzung, wie in einem der Ansprüche 1 bis 7 beansprucht, in eine Form eingebracht wird, in der vorher verstärkende Fasern vorfixiert wurden und anschließend die Härtung durchgeführt wird.

10. Faserverstärkter Verbundwerkstoff nach Anspruch 9, bei dem mindestens ein Teil der verstärkenden Fasern in Form eines nicht gewebten Vlieses vorliegt.

11. Faserverstärkter Verbundwerkstoff nach Anspruch 9, bei dem die verstärkenden Fasern Glasfasern einschließen.

12. Faserverstärkter Verbundwerkstoff nach Anspruch 9, bei dem die verstärkenden Fasern ein organisches Polymer einschließen.

13. Faserverstärkter Verbundwerkstoff nach Anspruch 9, bei dem die verstärkenden Fasern ein Metall einschließen.

## Revendications

1. Composition de résine pour une utilisation dans le moulage réactif par injection, qui comprend une résine époxy (A), un méthacrylate de glycidyle (B), un ester de vinyle (C), un agent de durcissement (D) de ladite résine époxy, un accélérateur de durcissement (E) et un initiateur de polymérisation radicalaire (F).

2. Composition de résine selon la revendication 1, dans laquelle ladite résine époxy (A) est préalablement mélangée audit méthacrylate de glycidyle (B), avant mélange avec les autres composants.

3. Composition de résine selon la revendication 1, dans laquelle ladite résine époxy (A) est une résine époxy représentée par la formule (1) ci-dessous:

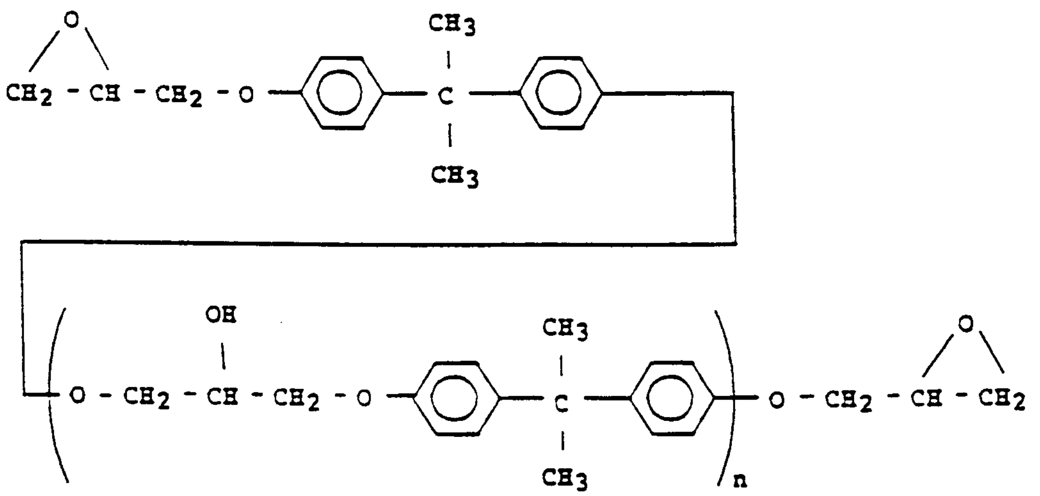

(1)

où n vaut 0 ou est un entier de 1 à 9.

4. Composition de résine selon la revendication 1, dans laquelle ledit ester de vinyle (C) est un di(méth)-acrylate représenté par la formule générale (2) ci-dessous:

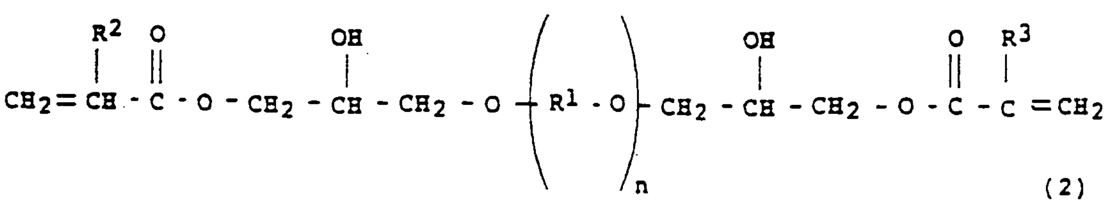

(2)

où $R^1$ est un radical alkylène ayant de 2 à 5 atomes de carbone; $R^2$ et $R^3$ représentent chacun individuellement l'hydrogène ou un radical $CH_3$; et n est un entier de 1 à 10.

5. Composition de résine selon la revendication 1, dans laquelle ledit ester de vinyle (C) est un di(méth)-acrylate représenté par la formule générale (3) ci-dessous:

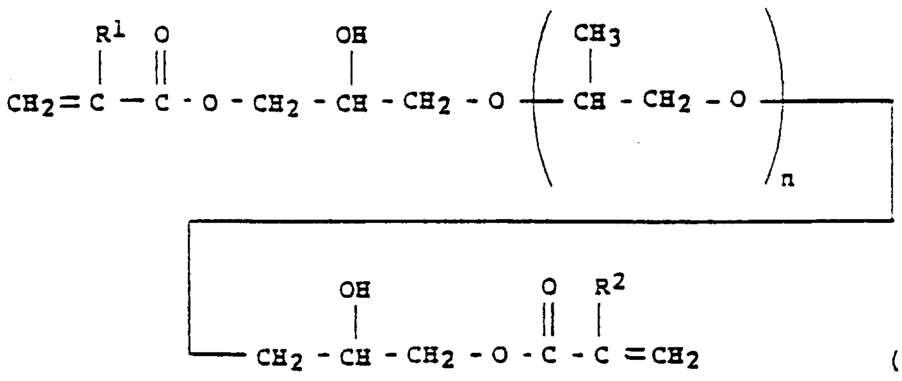

(3)

où $R^1$ et $R^2$ représentent chacun individuellement l'hydrogène ou un radical $CH_3$; et n est un entier de 1 à 10.

6. Composition de résine selon la revendication 1, dans laquelle ledit ester de vinyle (C) est un di(méth)-acrylate représenté par la formule générale (4) ci-dessous:

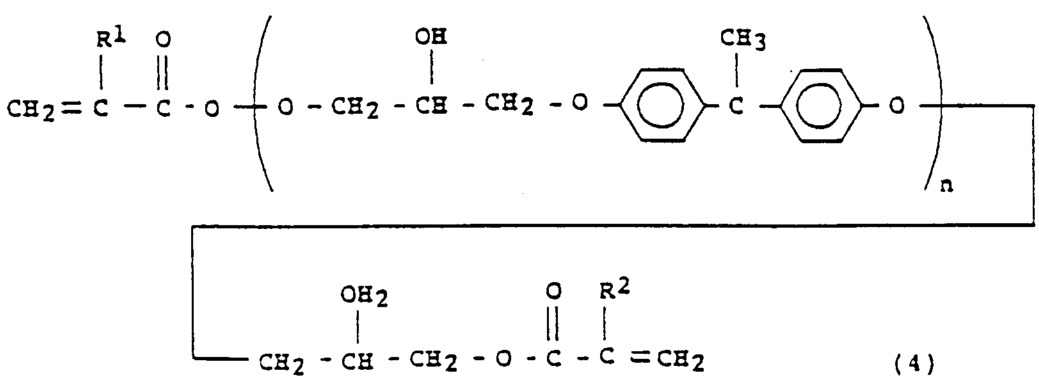

(4)

où $R^1$ et $R^2$ représentent chacun individuellement l'hydrogène ou un radical $CH_3$; et n est un entier de 1 à 9.

7. Composition de résine selon la revendication 1, dans laquelle ledit agent de durcissement (D) de ladite résine époxy est un anhydride d'acide dibasique.

8. Composition de résine selon la revendication 1, dans laquelle ledit accélérateur de durcissement (E) est un composé d'imidazole.

9. Matériau composite renforcé par fibres produit par un procédé de moulage réactif par injection dans lequel la composition de résine selon l'une quelconque des revendications 1 à 7 est introduite dans un moule dans lequel des fibres de renforcement ont préalablement été disposées, et le durcissement est alors effectué.

10. Matériau composite renforcé par fibres selon la revendication 9, dans lequel au moins une partie desdites fibres de renforcement sont sous la forme d un mat non tissé.

11. Matériau composite renforcé par fibres selon la revendication 9, dans lequel lesdites fibres de renforcement comportent de la fibre de verre.

12. Matériau composite renforcé par fibres selon la revendication 9, dans lequel lesdites fibres de renforcement comportent un polymère organique.

13. Matériau composite renforcé par fibres selon la revendication 9, dans lequel lesdites fibres de renforcement comportent un métal.